(19) Europäisches Patentamt
European Patent Office
Office européen des brevets

(11) **EP 4 768 306 A1**

(12) **DEMANDE DE BREVET EUROPEEN**

(43) Date de publication:
**01.07.2026 Bulletin 2026/27**

(21) Numéro de dépôt: **25225125.1**

(22) Date de dépôt: **18.12.2025**

(51) Classification Internationale des Brevets (IPC):
*B60L 3/00* [(2019.01)] *B60L 3/04* [(2006.01)]
*B60L 58/27* [(2019.01)] *H01M 10/615* [(2014.01)]
*H01M 10/625* [(2014.01)] *H02M 1/32* [(2007.01)]
*H02M 3/156* [(2006.01)]

(52) Classification Coopérative des Brevets (CPC):
**B60L 58/27; B60L 3/0023; B60L 3/04;
H01M 10/615; H01M 10/625; H02M 1/32;
H02M 3/156**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **26.12.2024 FR 2415277**

(71) Demandeur: **AMPERE s.a.s.**
**92100 Boulougne-Billancourt (FR)**

(72) Inventeurs:
• **FELTEN, Aurelie**
**78280 Guyancourt (FR)**
• **HALALCHI, Houssem**
**78280 Guyancourt (FR)**

(74) Mandataire: **Renault Group**
**1, avenue du Golf**
**FR TCR AVA 4 4C**
**78084 Guyancourt Cedex (FR)**

(54) **PROCÉDÉ DE DIAGNOSTIC D'UN SYSTÈME DE CHAUFFAGE D'UNE BATTERIE ÉLECTRIQUE D'ENTRAÎNEMENT D'UN VÉHICULE ÉLECTRIQUE OU HYBRIDE**

(57) Procédé de diagnostic d'un système de chauffage (1) d'une batterie électrique (2) d'entraînement d'un véhicule électrique ou hybride (100), le système de chauffage (1) comprenant un premier interrupteur commandé (4) par un calculateur (3),
le procédé de diagnostic comprenant les étapes suivantes :
- détermination d'une valeur du rapport cyclique de consigne de commande du premier interrupteur commandé (4),
- détermination, par une autre méthode, d'une valeur du rapport cyclique effectivement appliqué par le premier interrupteur commandé,
- comparaison de la valeur du rapport cyclique de consigne de commande du premier interrupteur commandé et de la valeur du rapport cyclique effectivement appliqué par le premier interrupteur commandé,
- en cas de discordance, signalisation de la discordance et/ou désactivation du dispositif de chauffage (9).

[Fig. 1]

EP 4 768 306 A1

**Description**

L'invention concerne un procédé de diagnostic d'un système de chauffage d'une batterie électrique d'entraînement d'un véhicule électrique ou hybride. L'invention concerne aussi un dispositif de diagnostic pour un système de chauffage d'une batterie électrique d'entraînement d'un véhicule électrique ou hybride. L'invention porte encore sur un système de chauffage automobile comprenant un tel dispositif de diagnostic. L'invention porte encore sur un véhicule automobile comprenant un tel dispositif de diagnostic et/ou un tel système de chauffage. L'invention porte également sur un programme d'ordinateur mettant en œuvre le procédé précédemment mentionné. L'invention porte enfin sur un support d'enregistrement sur lequel est enregistré un tel programme.

Au sein des systèmes de stockage d'énergie à base de batterie, il est indispensable de maintenir un certain niveau de performance sur une large plage de température. Toutefois, la composition électrochimique des cellules de batterie ne permet pas ce maintien de performances de manière absolue. Un phénomène est notamment observé à froid, où les réactions chimiques sont ralenties. De ce fait, et dans le but de favoriser la durabilité des cellules, la puissance de charge ou de décharge de la batterie se trouve limitée par un calculateur (BMS pour Battery management system). Ce calculateur équipé d'un programme logiciel transmet alors sur un réseau multiplexé (CAN : control area network) à un calculateur superviseur d'un système électrique (HEVC : hybrid and electric vehicle controller) une puissance maximum supportée par la batterie pouvant être insuffisante par rapport aux besoins du conducteur du véhicule.

Afin de résoudre ce problème, une solution technique consiste à équiper la batterie d'entraînement du véhicule électrique ou hybride (rechargeable ou non) avec un dispositif de chauffage, notamment une nappe chauffante thermiquement connectée à la batterie. Ce dispositif de chauffage est alimenté électriquement par la batterie d'entraînement elle-même ou par une autre batterie et est équipé par exemple d'un composant résistif permettant d'augmenter la température du liquide de refroidissement de la batterie par effet Joule.

La puissance de chauffe est déterminée par le calculateur BMS selon les conditions d'usage identifiées par le calculateur superviseur qui comprennent par exemple :

- la charge à froid,
- le roulage à froid
- le préconditionnement du véhicule en prévision d'un démarrage d'une mission de roulage...

Ce système de chauffage, bien que performant au vu des attentes du client, n'est pas sans risque. Le danger principal est la surchauffe de la batterie d'entraînement pouvant survenir notamment en cas de défaillance du système de commande. En effet, une nappe chauffante qui serait continûment alimentée par la batterie continuerait de faire monter la température des cellules via le liquide de refroidissement, ce qui risque de les endommager, voire de provoquer un incendie dans la batterie.

Le but de l'invention est de fournir un procédé de diagnostic d'un système de chauffage et un dispositif de diagnostic améliorant les dispositifs et procédés connus de l'art antérieur. En particulier, l'invention permet de fournir des moyens simples et robustes permettant de détecter un risque de surchauffe d'une batterie d'entraînement d'un véhicule qui serait causée par un système de chauffage défaillant.

Selon l'invention, un procédé permet de diagnostiquer un système de chauffage d'une batterie électrique d'entraînement d'un véhicule électrique ou hybride, le système de chauffage comprenant :

- un dispositif de chauffage, notamment un dispositif de chauffage à résistance électrique,
- une batterie d'alimentation électrique du dispositif de chauffage,
- un calculateur de pilotage de la puissance électrique d'alimentation du dispositif de chauffage, et
- un premier interrupteur commandé par le calculateur pour alimenter le dispositif de chauffage en modulation de largeur d'impulsions à partir de la batterie d'alimentation électrique et en appliquant un rapport cyclique de consigne de commande du premier interrupteur commandé.

Le procédé de diagnostic comprend, notamment périodiquement ou de temps en temps, les étapes suivantes :

- détermination, notamment par consultation du calculateur, à un instant donné, d'une valeur du rapport cyclique de consigne de commande du premier interrupteur commandé,
- détermination, par une autre méthode, notamment par mesure et/ou calcul et/ou estimation, à cet instant donné, d'une valeur du rapport cyclique effectivement appliqué par le premier interrupteur commandé,
- comparaison de la valeur du rapport cyclique de consigne de commande du premier interrupteur commandé et de la valeur du rapport cyclique effectivement appliqué par le premier interrupteur commandé,
- en cas de discordance entre la valeur du rapport cyclique de consigne de commande du premier interrupteur commandé et la valeur du rapport cyclique effectivement appliqué par le premier interrupteur commandé, signalisation de la discordance et/ou désactivation du dispositif de chauffage.

L'étape de désactivation peut comprendre l'ouverture d'un deuxième interrupteur commandé.

L'étape de signalisation peut comprendre un affichage sur une interface et/ou l'émission d'un signal acoustique.

De préférence, il existe une discordance lorsque la valeur du rapport cyclique de consigne de commande du premier interrupteur commandé et la valeur du rapport cyclique effectivement appliqué par le premier interrupteur commandé diffèrent de plus d'un seuil prédéfini réglable, par exemple typiquement aux alentours de 10% à 15% de la valeur du rapport cyclique de consigne de commande du premier interrupteur commandé.

L'étape de détermination d'une valeur du rapport cyclique effectivement appliqué par le premier interrupteur commandé peut comprendre :

- une mesure de la tension aux bornes du dispositif de chauffage,
- une mesure de la tension aux bornes de la batterie d'alimentation électrique, et
- un calcul du rapport des deux tensions.

Le rapport des deux tensions peut être considéré comme égal au rapport cyclique effectivement appliqué par le premier interrupteur commandé.

L'étape de détermination d'une valeur du rapport cyclique effectivement appliqué par le premier interrupteur commandé peut comprendre :

- une analyse des évolutions de la tension aux bornes du premier interrupteur commandé,
- une détermination de la première durée des phases dans lesquelles la tension est à une première valeur et une détermination de la deuxième durée des phases dans lesquelles la tension est à une deuxième valeur supérieure à la première valeur, et
- un calcul du rapport de la première durée sur la somme des première et deuxième durées.

Le rapport des durées peut être considéré comme égal au rapport cyclique effectivement appliqué par le premier interrupteur commandé.

L'invention porte aussi sur un dispositif de diagnostic pour un système de chauffage d'une batterie électrique d'entraînement d'un véhicule électrique ou hybride. Le dispositif de diagnostic peut comprendre des éléments matériels et/ou logiciels mettant en œuvre le procédé défini précédemment, notamment des éléments matériels et/ou logiciels conçus pour mettre en œuvre le procédé défini précédemment.

L'invention porte aussi sur un système de chauffage comprenant un dispositif de diagnostic défini précédemment.

L'invention porte aussi sur un véhicule automobile comprenant un système de chauffage défini précédemment et/ou un dispositif de diagnostic défini précédemment.

Selon l'invention, un produit programme d'ordinateur comprend des instructions de code de programme enregistrées sur un support lisible par ordinateur pour mettre en œuvre les étapes du procédé défini précédemment lorsque ledit programme fonctionne sur un ordinateur

Selon l'invention, un produit programme d'ordinateur téléchargeable depuis un réseau de communication et/ou enregistré sur un support de données lisible par un ordinateur et/ou exécutable par un ordinateur, est caractérisé en ce qu'il comprend des instructions qui, lorsque le programme est exécuté par l'ordinateur, conduisent celui-ci à mettre en œuvre le procédé défini précédemment.

Selon l'invention, un support d'enregistrement de données, lisible par un ordinateur, sur lequel est enregistré un programme d'ordinateur comprend des instructions de code de programme de mise en œuvre du procédé défini précédemment.

Selon l'invention, un support d'enregistrement lisible par ordinateur comprend des instructions qui, lorsqu'elles sont exécutées par un ordinateur, conduisent celui-ci à mettre en œuvre le procédé défini précédemment.

L'invention a encore pour objet un signal d'un support de données, portant le produit programme d'ordinateur défini précédemment.

Le dessin annexé représente, à titre d'exemple, un mode de réalisation d'un véhicule automobile selon l'invention et un mode d'exécution d'un procédé de diagnostic selon l'invention.

La figure 1 est une représentation schématique d'un mode de réalisation d'un véhicule automobile selon l'invention.

La figure 2 est un ordinogramme d'un mode d'exécution d'un procédé de diagnostic selon l'invention.

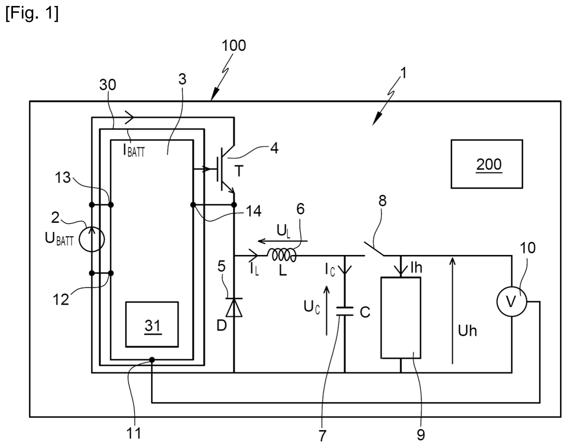

Un mode de réalisation d'un véhicule automobile 1 selon l'invention est décrit ci-après en référence à la figure 1.

Le véhicule automobile 100 est par exemple un véhicule automobile de tourisme ou un véhicule automobile utilitaire. Toutefois, le véhicule peut être de toute nature. Le véhicule automobile peut être à motorisation électrique ou à motorisation hybride (rechargeable ou non). En conséquence, le véhicule comprend une batterie électrique d'entraînement du véhicule 2.

Le véhicule automobile 100 comprend un système de chauffage 1 de la batterie d'entraînement 2.

Le véhicule peut aussi comprendre une interface utilisateur 200 permettant notamment l'émission de signaux visuels et/ou sonores et/ou acoustiques à destination d'un utilisateur.

Le système de chauffage 1 comprend :

- un dispositif de chauffage 9, notamment un dispositif de chauffage à résistance électrique, comme une nappe à base de résistance,

- une batterie d'alimentation électrique 2 du dispositif de chauffage, constituée de préférence par la batterie d'entraînement 2 elle-même, mais pouvant aussi être constituée en tout ou en partie par une autre batterie auxiliaire,

- un calculateur 3 de pilotage de la puissance électrique d'alimentation du dispositif de chauffage 9, et

- un premier interrupteur commandé 4 par le calculateur 3 pour alimenter le dispositif de chauffage 9 en modulation de largeur d'impulsions (MLI ; en anglais : Pulse Width Modulation, soit PWM) en appliquant un rapport cyclique de commande du premier interrupteur commandé 4 à partir de la batterie d'alimentation électrique 2. Du fait de l'inertie thermique, on peut se permettre d'avoir des commutations lentes dans l'intervalle [1 Hz ; 100 Hz].

Comme représenté sur la figure 1, dans un mode de réalisation, le système de chauffage 1 comprend principalement un montage série :

- de la batterie 2,
- de l'interrupteur commandé 4, et
- du dispositif de chauffage 9.

L'interrupteur commandé 4 est piloté par le calculateur 3. L'interrupteur commandé est par exemple un transistor de puissance 4. Le calculateur 3 utilise des données d'état de fonctionnement et d'environnement de la batterie 2 pour déterminer une puissance de chauffage nécessaire pour réchauffer la batterie 2. Sur cette base, le calculateur définit une commande de pilotage de l'interrupteur commandé 4 permettant d'alimenter électriquement le dispositif de chauffage 9 afin que ce dernier délivre la puissance thermique de chauffage nécessaire pour réchauffer la batterie 2. Comme vu précédemment, le pilotage de l'interrupteur commandé 4 est effectué en modulation de largeur d'impulsions afin de moduler la puissance de chauffage. Le rapport cyclique d'un tel pilotage permet de définir la puissance de chauffage.

Le dispositif de commande 9 est donc alimenté électriquement via une alternance de phases de commutation des états d'activation et désactivation (ON/OFF) de l'interrupteur commandé. Un interrupteur commandé de type transistor peut être commandé via une tension appliquée entre une grille et un émetteur qui permet de créer un canal de conduction entre un collecteur et un émetteur, pour laisser passer les électrons et ainsi fermer le circuit (batterie, dispositif de chauffage).

De préférence, le système de chauffage 1 comprend un condensateur 7 branché en parallèle du dispositif de chauffage 9. Ce condensateur 7 permet de lisser les fluctuations de la tension Uh aux bornes du dispositif de chauffage 9 lors des commutations de l'interrupteur commandé 4.

De préférence, le système de chauffage 1 comprend une bobine 6 branchée en série avec le dispositif de chauffage 9. Cette bobine 6 permet de lisser les fluctuations de l'intensité traversant l'ensemble dispositif de chauffage 9 et condensateur 7 lors des commutations de l'interrupteur commandé 4.

De préférence, le système de chauffage 1 comprend une diode 5 permettant d'éviter une inversion de courant dans le dispositif de chauffage 9. Cette diode 5 est branchée entre l'interrupteur commandé et la masse, l'anode étant connectée à la masse et la cathode étant connectée à l'interrupteur commandé 4.

De préférence, le système de chauffage 1 comprend un interrupteur commandé 8 permettant de déconnecter le dispositif de chauffage 9 de son alimentation électrique en cas de détection d'un risque ou d'un dysfonctionnement. L'interrupteur commandé 8 est de préférence aussi commandé par le calculateur 3. Un tel interrupteur commandé 8 est par exemple positionné en série entre le dispositif de chauffage 9 et l'interrupteur commandé 4, notamment au plus proche du dispositif de chauffage 9. En toute hypothèse, l'interrupteur commandé 8 peut être placé n'importe où il peut permettre de désactiver le dispositif de chauffage 9 même si l'interrupteur commandé 4 est maintenu dans un état fermé, notamment en cas de dysfonctionnement.

Le système de chauffage 1 comprend encore un dispositif de diagnostic 30. Le dispositif de diagnostic 30 comprend par exemple avantageusement des éléments de mesure de la tension en différents points du système de chauffage.

Par exemple, dans une première variante de réalisation, le dispositif de diagnostic 30 comprend :

- un élément 10 de mesure de la tension aux bornes du dispositif de chauffage 9, et
- un élément 12, 13 de mesure de la tension aux bornes de la batterie 2.

Par exemple, dans une deuxième variante de réalisation, le dispositif de diagnostic 30 comprend un élément 13, 14 de mesure de la tension aux bornes de l'interrupteur commandé 4.

Le dispositif de diagnostic 30 comprend encore un module d'analyse 31, par exemple contenu dans le calculateur 3, permettant d'analyser les tensions mesurées grâce aux éléments évoqués précédemment.

Les éléments de mesure de la tension peuvent comprendre ou consister en des fils reliant des points du circuit électrique à des bornes du calculateur 3, notamment des bornes d'entrée d'élément de mesure.

Le dispositif de diagnostic 30 comprend de préférence tous les éléments permettant de régir ou de mettre en œuvre le procédé de diagnostic objet de l'invention. En particulier, les éléments peuvent être du type matériel ou du type logiciel. De préférence, le procédé de diagnostic est mis en œuvre en temps réel. Par « procédé mis en œuvre en temps réel », on entend ici que le procédé permet d'aboutir à un diagnostic à partir de données d'état du système de commande du chauffage ne datant pas de plus de quelques minutes ou quelques secondes, par exemple moins d'une seconde.

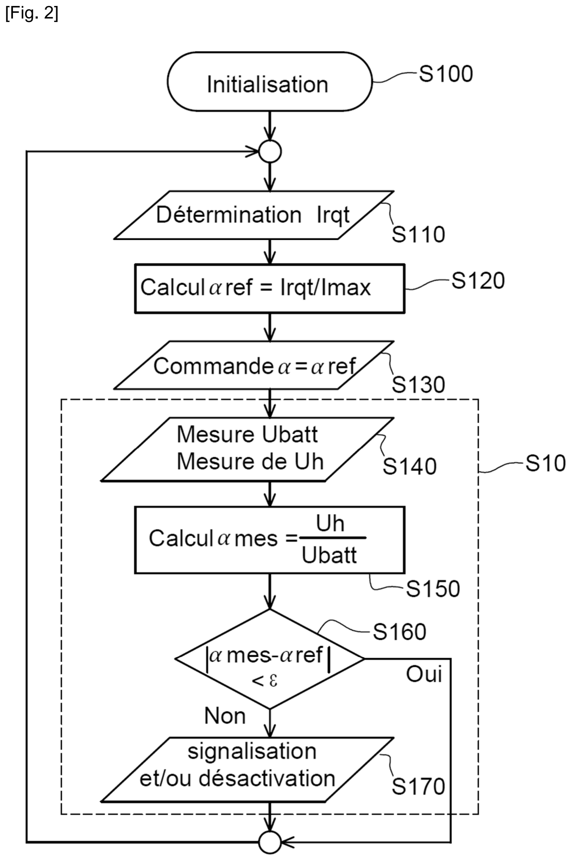

Un mode d'exécution d'un procédé de fonctionnement d'un système de chauffage tel qu'évoqué précédemment est décrit ci-après en référence à la figure 2. Un tel procédé de fonctionnement peut aussi être vu comme un procédé de fonctionnement d'un véhicule automobile.

Dans un tel mode d'exécution, après une éventuelle étape d'actualisation S100, on met en œuvre une ou plusieurs itérations des étapes qui sont décrites par la suite.

Dans une première étape S110, on détermine le courant Irqt devant circuler dans l'interrupteur commandé 4 pour alimenter électriquement le dispositif de chauffage 9. Cette détermination est assurée par exemple par le calculateur 3 qui tient compte des conditions de fonctionnement de la batterie d'entraînement 2 et qui en déduit un besoin de chauffage ou d'apport thermique, et par conséquent le courant Irqt nécessaire à cet apport thermique.

Dans une deuxième étape S120, on calcule un rapport cyclique αref de consigne de commande de l'interrupteur commandé 4. Ce calcul permet d'établir le rapport cyclique αref nécessaire à l'obtention du courant Irqt déterminé à la première étape. Ce calcul est par exemple mis en œuvre par le calculateur 3. En considérant l'intensité maximale Imax d'alimentation du dispositif de chauffage 9 lorsque la batterie d'entraînement 2 est directement connecté au dispositif de chauffage 9, on obtient la relation suivante :

$$\alpha ref = Irqt\ /\ Imax$$

Comme vu précédemment, ce rapport cyclique αref représente un rapport temporel des durées des phases de conduction et de non-conduction de l'interrupteur commandé 4. Le rapport cyclique αref vaut 1 lorsque l'interrupteur commandé 4 est en permanence fermé et vaut 0 lorsque l'interrupteur commandé 4 est en permanence ouvert.

Cette valeur du rapport cyclique de consigne de commande αref du premier interrupteur commandé 4 peut être directement utilisée dans la procédure de diagnostic qui est décrite plus bas. Ainsi, dans la procédure de diagnostic, une détermination à un instant donné, d'une valeur du rapport cyclique de consigne de commande du premier interrupteur commandé 4, peut être réalisée en reprenant la valeur αref calculée lors de la dernière étape S120, soit en consultant le calculateur 3.

Dans une troisième étape S130, on, notamment le calculateur 3, pilote l'interrupteur commandé 4 avec le rapport cyclique déterminé ou calculé à la deuxième étape 120.

Dans une quatrième étape S10, on met en œuvre une procédure de diagnostic qui est détaillée plus bas.

Enfin, à l'issue de l'étape S10, on boucle sur l'étape S110.

La mise en œuvre de l'étape S10 peut être effectuée à chaque itération des étapes S110, S120, S130. Alternativement, l'étape S10 peut être mise en œuvre seulement lors de certaines itérations des étapes S110, S120, S130. En tout état de cause, cette mise en œuvre de l'étape S10 est par exemple réalisée :

- périodiquement, c'est-à-dire à intervalle de temps donné ou à période donnée, ou
- de temps en temps, notamment sur requête d'un utilisateur ou sur requête du calculateur 3 ou sur requête d'un système tiers embarqué dans le véhicule 100.

On décrit plus en détail ci-après un mode d'exécution de l'étape S10 de diagnostic du fonctionnement du système de chauffage 1. Le diagnostic porte plus précisément sur le fonctionnement de l'interrupteur commandé 4, en particulier sur la mise en œuvre correcte du rapport cyclique commandé par le calculateur 3.

Dans une première sous-étape S140, on mesure la tension Uh aux bornes du dispositif de chauffage 9. Cette mesure est par exemple réalisée par le calculateur 3 via les éléments de mesure 10 et 11. On mesure également la tension aux bornes de la batterie Ubatt. Cette mesure est par exemple réalisée par le calculateur 3 via les éléments de mesure 12 et 13.

Dans une deuxième sous-étape S150, on calcule un rapport cyclique effectif αmes (ou effectivement appliqué par l'interrupteur commandé 4) à partir des mesures de la sous-étape S140. Ce calcul est par exemple effectué par le calculateur 3, notamment par le module 31 d'analyse, selon la formule suivante :

$$\alpha mes = Uh\ /\ Ubatt$$

Ainsi, dans cette étape S150, on détermine, par une autre méthode, notamment par mesure et/ou calcul, à un instant donné, une valeur du rapport cyclique αmes effectivement appliqué par le premier interrupteur commandé 4.

Dans une troisième sous-étape S160, on calcule une valeur absolue de la différence entre le rapport cyclique effectif αmes et le rapport cyclique αref de consigne de commande et on compare cette valeur absolue à un seuil ε. En alternative au calcul d'une valeur absolue de la différence et de la comparaison à un seuil, on peut aussi calculer une erreur en pourcentage entre le rapport cyclique effectif et le rapport cyclique de consigne de commande et comparer cette erreur à un seuil d'erreur. Si la valeur absolue de la différence ou l'erreur est inférieure à un seuil, on boucle sur l'étape S110. Au contraire, si la valeur absolue de la différence ou l'erreur est supérieure ou égale au seuil, on passe à une étape S170. Ces calculs et ces comparaisons sont de préférence réalisés par le calculateur 3, notamment par le module 31 d'analyse. Ainsi, dans la sous-étape S160, on compare la valeur du rapport cyclique de consigne de commande du premier interrupteur commandé 4 et la valeur du rapport cyclique effectivement appliqué par le premier interrupteur commandé 4.

Dans une quatrième sous-étape S170, on signale la discordance entre le rapport cyclique effectif et le rapport cyclique de consigne de commande à un utilisateur via une interface 200, par un signal visuel ou acoustique, ou à un système tiers du véhicule automobile et/ou on désactive le dispositif de chauffage 9. Pour réaliser cette désactivation, on peut commander l'ouverture de l'interrupteur commandé 8. La signalisation peut être commandée par le calculateur 3. La désactivation peut aussi être commandée par le calculateur 3. Ainsi, dans la sous-étape S170, en cas de discordance entre la valeur du rapport cyclique de consigne de commande du premier interrupteur commandé 4 et la valeur du rapport cyclique effectivement appliqué par le premier interrupteur commandé 4, on signale la discordance et/ou on désactive le dispositif de chauffage 9.

Ainsi, plus généralement, dans la procédure de diagnostic, on met en œuvre les étapes suivantes :

-   détermination, notamment par consultation du calculateur 3, à un instant donné, d'une valeur du rapport cyclique de consigne de commande du premier interrupteur commandé 4,
-   détermination, par une autre méthode, notamment par mesure et/ou calcul, à cet instant donné, d'une valeur du rapport cyclique effectivement appliqué par le premier interrupteur commandé 4,
-   comparaison de la valeur du rapport cyclique de consigne de commande du premier interrupteur commandé 4 et de la valeur du rapport cyclique effectivement appliqué par le premier interrupteur commandé 4,
-   en cas de discordance entre la valeur du rapport cyclique de consigne de commande du premier interrupteur commandé 4 et la valeur du rapport cyclique effectivement appliqué par le premier interrupteur commandé 4, signalisation de la discordance et/ou désactivation du dispositif de chauffage 9.

Quel que soit le mode de réalisation ou la variante, on considère par exemple qu'il existe une discordance lorsque :

-   la valeur du rapport cyclique de consigne de commande du premier interrupteur commandé, et
-   la valeur du rapport cyclique effectivement appliqué par le premier interrupteur commandé,

différent de plus d'un seuil d'erreur prédéfini réglable, typiquement aux alentours de 10% à 15% de la valeur du rapport cyclique de consigne de commande.

Dans le mode d'exécution décrit plus haut, l'étape de détermination d'une valeur du rapport cyclique effectivement appliqué par le premier interrupteur commandé 4 comprend :

-   une mesure de la tension aux bornes du dispositif de chauffage 9,
-   une mesure de la tension aux bornes de la batterie d'alimentation électrique 2, et
-   un calcul du rapport des deux tensions.

De plus, on considère le rapport des deux tensions comme égal au rapport cyclique effectivement appliqué par le premier interrupteur commandé.

Toutefois, en variante, une autre détermination est possible. Par exemple, l'étape de détermination d'une valeur du rapport cyclique effectivement appliqué par le premier interrupteur commandé peut comprendre :

-   une analyse des évolutions de la tension aux bornes du premier interrupteur commandé 4,
-   une détermination de la première durée des phases dans lesquelles la tension est à une première valeur et une détermination de la deuxième durée des phases dans lesquelles la tension est à une deuxième valeur supérieure à la première valeur, et
-   un calcul du rapport de la première durée sur la somme des première et deuxième durées.

De plus, on peut alors considérer que le rapport des durées est égal au rapport cyclique effectivement appliqué par le premier interrupteur commandé.

Grâce aux solutions décrites précédemment, un diagnostic de la commande en modulation de largeur d'impulsions du dispositif de chauffage 9 permet de localiser un dysfonctionnement au niveau de la partie commande électrique et le remplacement de l'interrupteur commandé 4 peut donc être envisagé avant celui du dispositif de chauffage 9, ce qui réduit fortement les coûts de service après-vente.

Un autre avantage consiste à s'affranchir de la nécessité de mise en place de capteurs supplémentaires. En effet, toutes les grandeurs mises en œuvre dans la procédure de diagnostic sont déjà disponibles dans les véhicules automobiles. Cet aspect réduit également le coût, l'encombrement physique, ainsi que la complexité algorithmique qui seraient induits par l'utilisation de capteurs supplémentaires.

Enfin, un autre avantage est la simplicité de mise en œuvre logicielle. Seules quelques opérations arithmétiques et logiques sont nécessaires, ce qui aboutit à une faible consommation en ressources de calcul.

Dans le mode d'exécution décrit plus haut, le chauffage de la batterie d'entraînement 2 est assuré par elle-même en alimentant le dispositif de chauffage 9. En variante, le chauffage de la batterie d'entraînement 2 peut être assuré par une batterie auxiliaire assurant l'alimentation du dispositif de chauffage 9.

Dans ce document, la notion « d'instant donné » ne doit pas être interprétée de manière très stricte. Il peut exister de légers décalages temporels entre les étapes S130 et S140, par exemple quelques millisecondes, voire quelques dizaines de millisecondes.

**Revendications**

1. Procédé de diagnostic d'un système de chauffage (1) d'une batterie électrique (2) d'entraînement d'un véhicule électrique ou hybride (100), le système de chauffage (1) comprenant :

   - un dispositif de chauffage (9), notamment un dispositif de chauffage à résistance électrique,
   - une batterie d'alimentation électrique (2) du dispositif de chauffage,
   - un calculateur (3) de pilotage de la puissance électrique d'alimentation du dispositif de chauffage (9), et
   - un premier interrupteur commandé (4) par le calculateur (3) pour alimenter le dispositif de chauffage (9) en modulation de largeur d'impulsions à partir de la batterie d'alimentation électrique (2) et en appliquant un rapport cyclique de consigne de commande du premier interrupteur commandé (4),

   le procédé de diagnostic comprenant, notamment périodiquement ou de temps en temps, les étapes suivantes :

   - détermination, notamment par consultation du calculateur (3), à un instant donné, d'une valeur du rapport cyclique de consigne de commande du premier interrupteur commandé (4),
   - détermination, par une autre méthode, notamment par mesure et/ou calcul et/ou estimation, à cet instant donné, d'une valeur du rapport cyclique effectivement appliqué par le premier interrupteur commandé,
   - comparaison de la valeur du rapport cyclique de consigne de commande du premier interrupteur commandé et de la valeur du rapport cyclique effectivement appliqué par le premier interrupteur commandé,
   - en cas de discordance entre la valeur du rapport cyclique de consigne de commande du premier interrupteur commandé et la valeur du rapport cyclique effectivement appliqué par le premier interrupteur commandé (4), signalisation de la discordance et/ou désactivation du dispositif de chauffage (9).

2. Procédé de diagnostic selon la revendication 1, caractérisé en ce que l'étape de désactivation comprend l'ouverture d'un deuxième interrupteur commandé (8).

3. Procédé de diagnostic selon la revendication 1 ou 2, **caractérisé en ce que** l'étape de signalisation comprend un affichage sur une interface (200) et/ou l'émission d'un signal acoustique.

4. Procédé de diagnostic selon l'une des revendications 1 à 3, **caractérisé en ce qu'**il existe une discordance lorsque la valeur du rapport cyclique de consigne de commande du premier interrupteur commandé et la valeur du rapport cyclique effectivement appliqué par le premier interrupteur commandé diffèrent de plus d'un seuil prédéfini réglable, par exemple typiquement aux alentours de 10% à 15% de la valeur du rapport cyclique de consigne de commande du premier interrupteur commandé.

5. Procédé de diagnostic selon l'une des revendications précédentes, **caractérisé en ce que** l'étape de détermination d'une valeur du rapport cyclique effectivement appliqué par le premier interrupteur commandé (4) comprend :

   - une mesure de la tension aux bornes du dispositif de chauffage (9),
   - une mesure de la tension aux bornes de la batterie d'alimentation électrique (2), et
   - un calcul du rapport des deux tensions.

6. Procédé de diagnostic selon la revendication précédente, **caractérisé en ce que** le rapport des deux tensions est considéré comme égal au rapport cyclique effectivement appliqué par le premier interrupteur commandé (4).

7. Procédé de diagnostic selon l'une des revendications précédentes, **caractérisé en ce que** l'étape de détermination d'une valeur du rapport cyclique effectivement appliqué par le premier interrupteur commandé comprend :

   - une analyse des évolutions de la tension aux bornes du premier interrupteur commandé (4),
   - une détermination de la première durée des phases dans lesquelles la tension est à une première valeur et une détermination de la deuxième durée des phases dans lesquelles la tension est à une deuxième valeur supérieure à la première valeur, et
   - un calcul du rapport de la première durée sur la somme des première et deuxième durées.

8. Procédé de diagnostic selon la revendication précédente, **caractérisé en ce que** le rapport des durées est considéré comme égal au rapport cyclique effectivement appliqué par le premier interrupteur commandé.

9. Dispositif de diagnostic (30) pour un système de chauffage (1) d'une batterie électrique (2) d'entraînement d'un véhicule électrique ou hybride (100), le dispositif de diagnostic (30) comprenant des éléments (3, 31, 10, 11, 12, 13, 14) matériels et/ou logiciels mettant en oeuvre le procédé selon l'une des revendications 1 à 8, notamment des éléments matériels (3, 31, 10, 11, 12, 13, 14) et/ou logiciels conçus pour mettre en œuvre le procédé selon l'une des revendications 1 à 8.

10. Système de chauffage (1) comprenant un dispositif de diagnostic (30) selon la revendication précédente.

11. Véhicule automobile (100) comprenant un système de chauffage (1) selon la revendication précédente et/ou un dispositif de diagnostic (30) selon la revendication 9.

[Fig. 1]

[Fig. 2]

| | Europäisches Patentamt European Patent Office Office européen des brevets | **RAPPORT DE RECHERCHE EUROPEENNE** | Numéro de la demande<br>**EP 25 22 5125** |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | DE 10 2018 219020 A1 (CONTI TEMIC MICROELECTRONIC GMBH [DE]) 14 mai 2020 (2020-05-14) * alinéa [0031] - alinéa [0048]; figure 1 * ----- | 10,11 | INV. B60L3/00 B60L3/04 B60L58/27 H01M10/615 H01M10/625 H02M1/32 H02M3/156 |
| X | US 2011/148378 A1 (GREK MARK [US]) 23 juin 2011 (2011-06-23) | 1-4,7-9 | |
| Y | * alinéa [0026] - alinéa [0033]; figure 4 * ----- | 5,6,10, 11 | |
| Y | US 2013/241513 A1 (TRAUTMANN FRANK [DE]) 19 septembre 2013 (2013-09-19) * abrégé; figure 2 * ----- | 5,6 | |
| A | US 2017/222549 A1 (WILHIDE MATTHEW L [US]) 3 août 2017 (2017-08-03) * abrégé; figure 4 * ----- | 1-11 | |

**DOMAINES TECHNIQUES RECHERCHES (IPC)**

B60L
H01M
H02M

Le présent rapport a été établi pour toutes les revendications

| Lieu de la recherche | Date d'achèvement de la recherche | Examinateur |
|---|---|---|
| La Haye | 17 avril 2026 | Arias Pérez, Jagoba |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

**EP 4 768 306 A1**

## ANNEXE AU RAPPORT DE RECHERCHE EUROPEENNE
## RELATIF A LA DEMANDE DE BREVET EUROPEEN NO.

**EP 25 22 5125**

**17-04-2026**

| Document brevet cité au rapport de recherche | Date de publication | Membre(s) de la famille de brevet(s) | Date de publication |
|---|---|---|---|
| DE 102018219020 A1 | 14-05-2020 | DE 102018219020 A1 | 14-05-2020 |
| | | WO 2020094686 A1 | 14-05-2020 |
| US 2011148378 A1 | 23-06-2011 | AU 2010339741 A1 | 12-07-2012 |
| | | CA 2783474 A1 | 14-07-2011 |
| | | CN 102725949 A | 10-10-2012 |
| | | ES 2450315 A2 | 24-03-2014 |
| | | GB 2488484 A | 29-08-2012 |
| | | US 2011148378 A1 | 23-06-2011 |
| | | WO 2011084809 A2 | 14-07-2011 |
| US 2013241513 A1 | 19-09-2013 | EP 2642650 A1 | 25-09-2013 |
| | | KR 20130106321 A | 27-09-2013 |
| | | TW 201401745 A | 01-01-2014 |
| | | US 2013241513 A1 | 19-09-2013 |
| US 2017222549 A1 | 03-08-2017 | EP 3203620 A1 | 09-08-2017 |
| | | US 2017222549 A1 | 03-08-2017 |

EPO FORM P0460